# EUROPÄISCHE PATENTSCHRIFT

(11) **EP 3 268 618 B1**
(45) Veröffentlichungstag und Bekanntmachung des Hinweises auf die Patenterteilung: **19.02.2020**
(21) Anmeldenummer: 15730738.0
(22) Anmeldetag: 15.06.2015
(51) Int. Cl.: F15B 15/06, F15B 15/28, F15B 19/00, F16K 31/163, F16K 37/00, G01D 18/00

(54) **DREHANTRIEB MIT STELLUNGSERFASSUNGSEINRICHTUNG UND KALIBRIERUNGSVERFAHREN**
ROTARY DRIVE COMPRISING A POSITION DETECTION DEVICE AND CALIBRATION METHOD
ENTRAÎNEMENT EN ROTATION ÉQUIPÉ D'UN DISPOSITIF DE DÉTECTION DE POSITION ET PROCÉDÉ D'ÉTALONNAGE

(43) Veröffentlichungstag der Anmeldung: 17.01.2018
(73) Patentinhaber: Festo AG & Co. KG, 73734 Esslingen (DE)
(72) Erfinder: MÖDINGER, Uwe, 73249 Wernau (DE); SCHNEIDER, Mathias, 70435 Stuttgart (DE); MESSERSCHMIDT,Karl, 73730 Esslingen (DE); FEILER, Andreas, 73529 Schwäbisch Gmünd (DE)
(74) Vertreter: Patentanwälte Magenbauer & Kollegen Partnerschaft mbB
(86) Internationale Anmeldenummer: PCT/EP2015/063330
(87) Internationale Veröffentlichungsnummer: WO 2016/202355

(56) Entgegenhaltungen:
- EP-A1- 1 422 452
- DE-A1-102007 010 115
- US-A- 6 135 147

## Beschreibung

Die Erfindung betrifft einen Drehantrieb zur Betätigung eines Ventilglieds einer Ventilarmatur, mit einem Gehäuse, das eine Antriebseinrichtung und eine von der Antriebseinrichtung antreibbare, drehbar gelagerte Abtriebswelle aufweist, die an das Ventilglied ankoppelbar ist, und einer Stellungserfassungseinrichtung zur Erfassung einer Stellung der Abtriebswelle, wobei die Stellungserfassungseinrichtung ein an der Abtriebswelle drehfest angebrachtes Magnetmodul und ein am oder im Gehäuse angebrachtes Sensormodul aufweist, das ausgebildet ist, einen Magnetfeldmesswert gemäß dem von dem Magnetmodul erzeugten Magnetfeld zu erfassen.

Ein Drehantrieb dieser Art kann auf eine Ventilarmatur bzw. ein Prozessventil aufgesetzt werden, um ein in einem Prozessfluid befindliches Ventilglied der Ventilarmatur zu betätigen und so einen Fluidstrom zu beeinflussen und/oder zu sperren. Die Abtriebswelle des Drehantriebs ist dabei an eine Spindel der Ventilarmatur mechanisch angekoppelt. Die Spindel wiederum ist an das Ventilglied der Ventilarmatur mechanisch angekoppelt, so dass über eine Betätigung der Spindel das Ventilglied betätigt wird. Das Ventilglied der Ventilarmatur ist beispielsweise als Klappe, Drosselklappe, Kegelventil, Kugelventil, oder Kugelhahn ausgebildet.

Aus der US 6,135,147 ist ein Drehantrieb mit einer oben auf dem Gehäuse des Drehantriebs angebrachten Überwachungsanordnung bekannt, die dazu dient, die Stellung der Abtriebswelle zu erfassen. Zu diesem Zweck ist an der oben aus dem Gehäuse herausragenden Abtriebswelle eine mit Magneten versehene Anzeigevorrichtung befestigt, die sich zusammen mit der Abtriebswelle dreht. Ferner sind in einer Überwachungsanordnung, die oben auf dem Gehäuse neben der Anzeigevorrichtung angeordnet ist, Magnetschalter vorgesehen, die abhängig von der Lage der Magnete eine Bestromung von LEDS bewirken.

Die DE 10 2007 010 115 A1 beschreibt einen Zylinderschalter mit einer elektronischen Auswerteeinheit. Der Auswerteeinheit gehört eine Diagnosefunktionseinheit an, die die gewünschte Geschwindigkeit des Kolbens überwacht und bei erreichen unzulässiger Werte ein entsprechendes Signal an eine übergeordnete Steuerung ausgibt.

Es ist eine Aufgabe der Erfindung bei einem Drehantrieb der eingangs erwähnten Art eine Eingabemöglichkeit zu schaffen, anhand der ein Benutzer den Drehantrieb in einfacher und praktischer Weise in einen vorbestimmten Betriebszustand, wie beispielsweise einen Kalibrierungszustand, versetzen kann.

Die Aufgabe wird für einen fluidbetätigten Drehantrieb der eingangs beschriebenen Art mit den Merkmalen des Anspruchs 1 gelöst.

Bei dem erfindungsgemäßen Drehantrieb ist das Magnetmodul und/oder das Sensormodul vom Drehantrieb abnehmbar angebracht, und der Drehantrieb umfasst eine Steuereinrichtung, die ausgebildet ist, gemäß dem Magnetfeldmesswert zu bestimmen, dass das Magnetmodul oder das Sensormodul von dem Drehantrieb abgenommen oder an den Drehantrieb angebracht wird bzw. wurde, und abhängig von der Bestimmung zu bewirken, dass der Drehantrieb in einen vorbestimmten Betriebszustand versetzt wird.

Erfindungsgemäß dient demnach das Magnetmodul und/oder das Sensormodul als Eingabevorrichtung, anhand welcher ein Benutzer bewirken kann, dass der Drehantrieb in einen vorbestimmten Betriebszustand versetzt wird. Die Benutzereingabe erfolgt dadurch, dass der Benutzer das Magnetmodul oder das Sensormodul von dem Drehantrieb abnimmt oder, in einem Zustand, in dem das Magnetmodul oder das Sensormodul bereits abgenommen ist, das Magnetmodul oder das Sensormodul an den Drehantrieb anbringt.

Das Magnetmodul und das Sensormodul formen Teil der Stellungserfassungseinrichtung, die bereits an dem Drehantrieb vorgesehen ist, um eine Stellung der Abtriebswelle zu erfassen. Somit muss zur Bereitstellung der Eingabemöglichkeit keine zusätzliche Eingabevorrichtung, wie beispielsweise ein spezieller Schalter, vorgesehen werden. Stattdessen werden die bereits am Drehantrieb vorhandenen Module vorteilhaft eingesetzt, um eine weitere Funktion - nämlich die Eingabemöglichkeit durch den Benutzer - bereitzustellen.

Die Abnahme des Magnetmoduls oder des Sensormoduls wird dabei von der Steuereinrichtung gemäß dem von dem Sensormodul erfassten Magnetfeldmesswert bestimmt bzw. erkannt. Insbesondere wird dabei die Magnetfeldmessfunktion des Sensormoduls verwendet, die bereits der Erfassung der Stellung der Abtriebswelle dient und daher sowieso schon vorhanden ist. Somit muss keine zusätzliche Sensorvorrichtung vorgesehen werden, um die Abnahme bzw. Anbringung des Magnetmoduls bzw. des Sensormoduls zu erfassen.

Vorzugsweise kann die Erfindung gemäß den folgenden beiden Varianten ausgeführt werden.

Gemäß der ersten Variante ist das Magnetmodul an der Abtriebswelle abnehmbar angebracht bzw. angeordnet, während das Sensormodul am Gehäuse befestigt ist, so dass es vorzugsweise nicht ohne Lösen eines Befestigungsmittels, wie beispielsweise einer Schraube, von dem Gehäuse abgenommen werden kann. Das Magnetmodul ist beispielsweise auf ein axiales Ende der Abtriebswelle aufgesteckt, so dass es abnehmbar ist, ohne dass dafür ein Befestigungsmittel, wie beispielsweise eine Schraube, gelöst werden muss. Das Sensormodul ist ausgebildet, einen Magnetfeldmesswert gemäß dem von dem Magnetmodul erzeugten Magnetfeld zu erfassen. Solange das Magnetmodul an der Abtriebswelle angebracht ist, liegt der von dem Sensormodul erfasste Magnetfeldmesswert innerhalb eines bestimmten Wertebereichs. Wenn das Magnetmodul abgenommen wird, vergrößert sich der Abstand zwischen dem Magnetmodul und dem Sensormodul, und der erfasste Magnetfeldmesswert verlässt den bestimmten Wertebereich. Somit kann gemäß dem Magnetfeldmesswert bestimmt werden, dass das Magnetmodul abgenommen wurde, und basierend auf dieser Bestimmung bewirkt werden, dass der Drehantrieb in einen vorbestimmten Betriebszustand versetzt wird. Die Bestimmung ob bzw. dass das Magnetmodul abgenommen wurde, wird dabei von einer Steuereinrichtung durchgeführt. Die Steuereinrichtung ist vorzugsweise in dem Sensormodul vorgesehen.

Um zu bewirken, dass der Drehantrieb in den vorbestimmten Betriebszustand versetzt wird, nimmt die Steuereinrichtung entweder selbst diesen Betriebszustand ein und/oder gibt einen oder mehrere entsprechende Befehle an andere Einheiten des Drehantriebs oder an mit dem Drehantrieb verbundene Einheiten aus.

Gemäß der ersten Variante ist es ferner möglich, ein Anbringen des Magnetmoduls an die Abtriebswelle zu erfassen. Solange das Magnetmodul nicht an der Abtriebswelle angebracht ist bzw. entfernt von dem Drehantrieb aufbewahrt wird, liegt der von dem Sensormodul erfasste Magnetfeldmesswert außerhalb des vorstehend erwähnten bestimmten Wertebereichs. Wenn nun das Magnetmodul an die Abtriebswelle angebracht wird, so bewegt sich der Magnetfeldmesswert wieder in den vorstehend erwähnten Wertebereich. Mittels der Steuereinrichtung kann diese Veränderung erfasst werden und basierend darauf, wie vorstehend bereits beschrieben, bewirkt werden, dass der Drehantrieb einen vorbestimmten Betriebszustand einnimmt.

Vorzugsweise ist der Drehantrieb bzw. die Steuereinrichtung derart ausgebildet, dass bei Abnahme des Magnetmoduls ein erster Betriebszustand und bei Anbringung des Magnetmoduls ein von dem ersten Betriebszustand verschiedener zweiter Betriebszustand eingenommen wird.

Alternativ oder zusätzlich zu der vorstehend beschriebenen ersten Variante kann der Drehantrieb auch gemäß einer zweiten Variante ausgeführt sein.

Gemäß der zweiten Variante ist insbesondere das Sensormodul am Gehäuse des Drehantriebs abnehmbar angebracht, indem es beispielsweise auf eine an dem Gehäuse befestigte Steckverbindung gesteckt ist. Gemäß der zweiten Variante ist also das Sensormodul das Element, das von einem Benutzer von dem Drehantrieb abgenommen oder an diesen angebracht werden kann, um so zu bewirken, dass der Drehantrieb in einen vorbestimmten Betriebszustand versetzt wird.

Vorzugsweise ist gemäß der zweiten Variante die Steuereinrichtung separat von dem Sensormodul an oder in dem Gehäuse des Drehantriebs angeordnet, so dass auch bei Abnahme des Sensormoduls die Funktion der Steuereinrichtung noch gegeben ist. Wenn die Steuereinrichtung separat von dem Sensormodul angeordnet ist, wird der erfasste Magnetfeldmesswert von dem Sensormodul an die Steuereinrichtung ausgegeben. Die Steuereinrichtung ist vorzugsweise ausgebildet, eine Abnahme des Sensormoduls zu bestimmen bzw. erkennen, wenn sie keinen gültigen Magnetfeldmesswert von der Steuereinrichtung mehr empfängt. Ferner ist die Steuereinrichtung ausgebildet, eine Anbringung des Sensormoduls zu erkennen, wenn der Empfang von gültigen Magnetfeldmesswerten einsetzt.

Alternativ oder zusätzlich dazu kann das Sensormodul auch über ein Kabel mit dem Drehantrieb in Verbindung bleiben, selbst wenn es von dem Drehantrieb abgenommen wird. In diesem Fall kann die Steuereinrichtung in dem Sensormodul integriert sein und die Erfassung von Magnetfeldmesswerten selbst bei Abnahme des Sensormoduls erfolgen. Die Abnahme bzw. Anbringung des Sensormoduls von dem Drehantrieb kann dann darüber bestimmt bzw. erkannt werden, dass der erfasste Magnetfeldmesswert einen bestimmten Wertebereichs verlässt, bzw. sich in einen bestimmten Wertebereich bewegt, wie dies bereits vorstehend im Zusammenhang mit der ersten Variante beschrieben wurde.

Vorzugsweise ist der Drehantrieb bzw. die Steuereinrichtung derart ausgebildet, dass bei Abnahme des Sensormoduls ein erster Betriebszustand und bei Anbringung des Sensormoduls ein von dem ersten Betriebszustand verschiedener zweiter Betriebszustand eingenommen wird.

Zweckmäßigerweise ist der Drehantrieb bzw. die Steuereinrichtung ausgebildet, basierend auf der Bestimmung der Abnahme und/oder Anbringung des Magnetmoduls oder des Sensormoduls wenigstens eine vorbestimmte Operation auszuführen.

Das Magnetmodul ist an der Abtriebswelle drehfest angebracht und nimmt somit eine Drehbewegung der Abtriebswelle auf. Das bedeutet, dass sich das Magnetmodul mit der Abtriebswelle mitdreht bzw. von dieser verschwenkt wird. Dementsprechend wird die Stellung des Magnetmoduls von der Stellung der Abtriebswelle bestimmt. Hierfür kann das Magnetmodul direkt an der Abtriebswelle befestigt sein.

Das Magnetmodul umfasst vorzugsweise eine Magnetanordnung, die insbesondere derart ausgebildet und/oder angeordnet ist, dass das Sensormodul bei verschiedenen Stellungen der Abtriebswelle auch verschiedene Magnetfeldmesswerte erfasst. Zu diesem Zweck kann die Magnetanordnung mit einer räumlich variierenden Magnetisierung versehen sein. Alternativ oder zusätzlich dazu kann die Magnetanordnung derart relativ zur Abtriebswelle angeordnet sein, dass das von der Magnetanordnung erzeugte Magnetfeld in Bezug auf die Axialrichtung der Abtriebswelle in wenigstens einer Raumrichtung nicht kreissymmetrisch ist.

Das Sensormodul ist ausgebildet, einen Magnetfeldmesswert gemäß dem von der Magnetanordnung erzeugten Magnetfeld zu erfassen. Das Sensormodul weist zu diesem Zweck zum Beispiel einen Hallsensor, insbesondere einen 3D-Hallsensor auf, der ausgebildet ist, eine Magnetfeldstärke in einer oder mehreren Raumrichtungen zu erfassen.

Die Stellungserfassungseinheit dient dazu, eine Stellung der Abtriebswelle zu erfassen. Vorzugsweise ist die Stellungserfassungseinheit ausgebildet, in Abhängigkeit von dem erfassten Magnetfeldmesswert ein einer Stellung bzw. Winkelstellung der Abtriebswelle entsprechendes Stellungssignal bereitstellt. Vorzugsweise umfasst die Stellungserfassungseinheit dafür eine Auswerteelektronik, die den erfassten Magnetfeldmesswert in ein die Winkelstellung der Abtriebswelle darstellendes Stellungssignal umsetzt. Die Auswerteelektronik kann insbesondere im Sensormodul vorgesehen sein. Vorzugsweise umfasst die Steuereinrichtung die Auswertelektronik.

Die Stellungserfassungseinheit ist vorzugsweise ausgebildet, ein oder zwei Winkelstellungen der Abtriebswelle, wie beispielsweise beide Endstellungen der Abtriebswelle, zu erfassen, und in dem Stellungssignal darzustellen. Endstellungen sind in diesem Zusammenhang insbesondere Stellungen der Abtriebswelle, bei denen ein von dem Drehantrieb betätigtes Ventilglied einer Ventilarmatur vollständig geöffnet oder gesperrt ist. Zusätzlich dazu kann die Stellungserfassungseinheit auch ausgebildet sein, beliebige Winkelstellungen der Abtriebswelle zwischen den Endstellungen zu erfassen und in dem Stellungssignal darzustellen.

Vorteilhafte Weiterbildungen der Erfindung sind Gegenstand der Unteransprüche.

Bei einer Ausgestaltung der Erfindung ist vorgesehen, dass die Steuereinrichtung ausgebildet ist, bei Bestimmung der Anbringung des Magnetmoduls oder des Sensormoduls den Drehantrieb in einen Kalibrierungszustand zu versetzen.

Bei einem Drehantrieb der eingangs erwähnten Art kann es erforderlich sein, die Stellungserfassungseinrichtung dahingehend zu kalibrieren, dass eine oder mehrere bestimmte Stellungen der Abtriebswelle, wie beispielsweise die beiden Endstellungen der Abtriebswelle den Magnetfeldmesswerten zugeordnet werden, die das Sensormodul erfasst, wenn sich die Abtriebswelle in dieser bzw. diesen vorbestimmten Stellungen befindet. Ist eine solche Zuordnung in der Steuereinrichtung abgelegt, so kann diese dann von einem erfassten Magnetfeldmesswert auf eine bestimmte Stellung der Abtriebswelle schließen bzw. ein entsprechendes Stellungssignal bereitstellen.

Vorzugsweise ist der Drehantrieb bzw. die Steuereinrichtung ausgebildet, den Kalibrierungszustand einzunehmen, wenn die Steuereinrichtung bestimmt, dass das Magnetmodul an die Abtriebswelle angebracht wird.

Dies ist besonders vorteilhaft, da unter Umständen bei der Anbringung eines neuen Magnetmoduls die vorstehend beschriebene Kalibrierung sowieso durchgeführt werden muss. Deshalb ist es besonders praktisch, den Kalibrierungsvorgang gerade durch die Anbringung des Magnetmoduls auszulösen.

In weiterer Ausgestaltung der Erfindung ist vorgesehen, dass die Steuereinrichtung ausgebildet ist, im Kalibrierungszustand wenigstens einen erfassten Magnetfeldmesswert in Zuordnung zu wenigstens einer vorbestimmten Stellung, vorzugsweise einer Endstellung, der Abtriebswelle abzuspeichern.

Wie bereits vorstehend beschrieben, wird im Kalibrierungszustand erfasst, welcher Magnetfeldmesswert einer vorbestimmten Stellung der Abtriebswelle entspricht. Insbesondere wird dies für die beiden Endstellungen der Abtriebswelle vorgenommen.

Dies kann insbesondere dann erforderlich sein, nachdem die Endstellungen über Stellelemente neu eingestellt wurden.

In weiterer Ausgestaltung der Erfindung ist vorgesehen, dass die Steuereinrichtung ausgebildet ist, einen erfassten Magnetfeldmesswert in Zuordnung zu einer vorbestimmten Stellung der Abtriebswelle abzuspeichern, wenn für eine vorbestimmte Zeitperiode der von dem Sensormodul erfasste Magnetfeldmesswert in einem vorbestimmten Toleranzbereich konstant ist.

In dem Kalibrierungszustand wird die vorbestimmte Stellung, vorzugsweise eine oder beide Endstellungen der Abtriebswelle, angefahren. Dies kann dadurch erfolgen, dass die Steuereinrichtung einen entsprechenden Steuerbefehl an die Antriebseinrichtung ausgibt. Alternativ kann ein Anfahren an die vorbestimmte Stellung auch über eine externe, mit dem Drehantrieb verbundene Steuereinheit instruiert bzw. bewirkt werden. Ist die Endlage angefahren, so kann die Abtriebswelle nicht mehr weiter gedreht werden. In diesem Fall bleibt auch der von dem Sensormodul erfasste Magnetfeldmesswert konstant. Die Steuereinrichtung ist entsprechend ausgebildet, im Kalibrierungszustand zu erfassen, dass ein erfasster Magnetfeldmesswert für eine vorbestimmte Zeitperiode innerhalb eines vorbestimmten Toleranzbereichs konstant ist, und in diesem Fall den erfassten Magnetfeldmesswert als einen die Endlage anzeigenden Magnetfeldmesswert bzw. in Zuordnung zu der Endlage abzuspeichern. Vorzugsweise ist die Steuereinrichtung ausgebildet, die beschriebene Vorgehensweise für eine oder beide Endlagen der Abtriebswelle durchzuführen.

In weiterer Ausgestaltung der Erfindung ist vorgesehen, dass die Steuereinrichtung ausgebildet ist, bei Bestimmung der Abnahme des Magnetmoduls oder des Sensormoduls den Drehantrieb in einen Fehlerzustand zu versetzen, in dem die Steuereinrichtung ein Fehlersignal bereitstellt und/oder den wenigstens einen in Zugehörigkeit zu der wenigstens einen Stellung gespeicherten Magnetfeldmesswert löscht.

Vorzugsweise ist die Steuereinrichtung ausgebildet, den Drehantrieb in den Fehlerzustand zu versetzen, wenn bestimmt wird, dass das Magnetmodul abgenommen wird.

In weiterer Ausgestaltung der Erfindung ist vorgesehen, dass der Drehantrieb fluidbetätigt ist und die Antriebsvorrichtung einen Kolbenraum, eine in dem Kolbenraum angeordnete und an die Abtriebswelle mechanisch angekoppelte Antriebskolbenanordnung, die den Kolbenraum in mehrere Kammern unterteilt, und eine Steuerventilanordnung umfasst, die ausgebildet ist, wenigstens eine der Kammern mit einem Druckfluid zu beaufschlagen.

Vorzugsweise weist das Gehäuse einen Rohrkörper auf, in dem der Kolbenraum vorgesehen ist. Zweckmäßigerweise umfasst die Antriebskolbenanordnung einen ersten und einen zweiten Antriebskolben, die den Kolbenraum in wenigstens zwei Kammern unterteilen. Zweckmäßigerweise können die beiden Kammern mit verschiedenen Drücken beaufschlagt werden, um eine Linearbewegung des Antriebskolbens und somit eine Drehbewegung der Abtriebswelle zu bewirken.

In weiterer Ausgestaltung der Erfindung ist vorgesehen, dass die Steuereinrichtung ausgebildet ist, bei Bestimmung der Abnahme des Magnetmoduls oder des Sensormoduls den Drehantrieb in einen Entlüftungszustand zu versetzen, in dem wenigstens eine der Kammern entlüftet wird.

Vorzugsweise ist die Steuereinrichtung ausgebildet, den Drehantrieb in den Entlüftungszustand zu versetzen, wenn bestimmt wird, dass das Magnetmodul abgenommen wird.

Zweckmäßigerweise ist die Steuereinrichtung ausgebildet, in dem Entlüftungszustand ein entsprechendes Signal an eine Steuerventilanordnung auszugeben, um eine Entlüftung einer Kammer über die Steuerventilanordnung zu bewirken.

In weiterer Ausgestaltung der Erfindung ist vorgesehen, dass die Steuereinrichtung ausgebildet ist, bei Bestimmung der Abnahme des Magnetmoduls oder des Sensormoduls den Drehantrieb in einen Wartungszustand zu versetzen, in dem die Steuerventilanordnung gesperrt ist, so dass die Abtriebswelle nicht durch die Antriebseinrichtung angetrieben werden kann.

Vorzugsweise ist die Steuereinrichtung ausgebildet, den Drehantrieb in den Wartungszustand zu versetzen, wenn bestimmt wird, dass das Magnetmodul abgenommen wird.

Zweckmäßigerweise ist die Steuereinrichtung ausgebildet, in dem Wartungszustand ein entsprechendes Signal an die Antriebseinrichtung, wie beispielsweise eine Steuerventilanordnung, auszugeben, um ein Sperren der Antriebseinrichtung zu bewirken.

In weiterer Ausgestaltung der Erfindung ist vorgesehen, dass die Steuereinrichtung ausgebildet ist, bei Bestimmung der Abnahme des Magnetmoduls oder des Sensormoduls den Drehantrieb in einen Not-Aus-Zustand zu versetzen, in dem die Abtriebswelle in eine vorbestimmte Not-Aus-Stellung gefahren wird und/oder ein durch die Antriebseinrichtung auf die Abtriebswelle beaufschlagtes Drehmoment herabgesetzt wird.

Vorzugsweise ist die Steuereinrichtung ausgebildet, den Drehantrieb in den Not-Aus-Zustand zu versetzen, wenn bestimmt wird, dass das Magnetmodul abgenommen wird.

Zweckmäßigerweise ist die Steuereinrichtung ausgebildet, in dem Not-Aus-Zustand ein entsprechendes Signal an die Antriebseinrichtung, wie beispielsweise eine Steuerventilanordnung, auszugeben, um zu bewirken, dass die Abtriebswelle in die Not-Aus-Stellung gefahren wird und/oder das Drehmoment herabgesetzt wird.

In weiterer Ausgestaltung der Erfindung ist vorgesehen, dass ein axiales Ende der Abtriebswelle aus einem Wandungsabschnitt des Gehäuses herausgeführt ist und das Magnetmodul auf dem axialen Ende der Abtriebswelle aufgesetzt ist.

Somit ist das Magnetmodul außen am Gehäuse angeordnet und kann dadurch von dem Benutzer in besonders einfacher Weise abgenommen bzw. angebracht werden.

In weiterer Ausgestaltung der Erfindung ist vorgesehen, dass das Magnetmodul als Stellungsanzeiger ausgebildet ist, der ein Anzeigeelement, vorzugsweise eine Markierung, zur visuellen Anzeige einer Stellung der Abtriebswelle sowie eine Magnetanordnung aufweist.

Der Stellungsanzeiger kann insbesondere zylinder- bzw. scheibenförmig ausgebildet und koaxial zu der Abtriebswelle angeordnet sein. Insbesondere weist der Stellungsanzeiger die Form eines Pucks auf. Vorzugsweise ist eine Magnetanordnung in einem unteren oder oberen Abschnitt des Stellungsanzeigers angeordnet um so nahe an dem Sensormodul angeordnet zu sein. Insbesondere sind das Sensormodul und der Stellungsanzeiger derart angeordnet bzw. ausgebildet, dass sich das Sensormodul bis unterhalb bzw. oberhalb des Stellungsanzeigers erstreckt.

Vorzugsweise ist das Anzeigeelement bzw. die Markierung in Bezug auf die Axialrichtung der Abtriebswelle nicht kreissymmetrisch ausgebildet, so dass aus der Ausrichtung des Anzeigeelements bzw. der Markierung visuell auf die aktuelle Winkelstellung der Abtriebswelle geschlossen werden kann.

Der Stellungsanzeiger dient somit drei verschiedenen Zwecken. Zunächst ermöglicht er es einem Benutzer, mithilfe des Anzeigeelements die aktuelle Winkelstellung der Abtriebswelle und dadurch auch eine Winkelstellung eines von der Abtriebswelle betätigten Ventilglieds einer Ventilarmatur visuell zu erfassen. Ferner dient der Stellungsanzeiger dazu, die Magnetanordnung aufzunehmen und gemäß einer Drehbewegung der Abtriebswelle relativ zum Sensormodul zu drehen bzw. verschwenken, so dass am Sensormodul die Drehbewegung bzw. eine dadurch hervorgerufene Winkelstellungsänderung der Abtriebswelle zu einem veränderten Magnetfeld führt und somit erfasst werden kann. Schließlich dient der Stellungsanzeiger auch noch als Eingabevorrichtung mittels welcher ein Benutzer durch Abnahme oder Anbringung des Stellungsanzeigers an der Abtriebswelle bewirken kann, dass der Drehantrieb in einen vorbestimmten Betriebszustand versetzt wird.

Vorzugsweise umfasst das als Stellungsanzeiger ausgebildete Magnetmodul eine Magnetanordnung, die einen Permanentmagneten aufweist, der vorzugsweise ringförmig, insbesondere als Ringsegment, ausgebildet ist.

Insbesondere ist der ringförmige bzw. als Ringsegment ausgebildete Permanentmagnet dabei konzentrisch zu der Abtriebswelle angeordnet, so dass der Abstand zwischen dem Permanentmagneten und dem Sensormodul bei einer Drehung der Abtriebswelle zwischen den beiden Endstellungen der Abtriebswelle konstant bleibt. Der Permanentmagnet kann dabei insbesondere eine entlang seines Umfangs variierende Magnetisierung aufweisen.

In weiterer Ausgestaltung der Erfindung ist vorgesehen, dass die Magnetanordnung einen oder mehrere Magnetstäbe umfasst. Der Magnetstab bzw. die Magnetstäbe sind dabei vorzugsweise nicht koaxial zu der Abtriebswelle angeordnet.

In weiterer Ausgestaltung der Erfindung ist vorgesehen, dass das Sensormodul in einer Aufnahmekammer in dem Wandungsabschnitt des Gehäuses angeordnet ist.

Da das Sensormodul in dem Gehäuse vorgesehen ist und nicht auf dem Gehäuse neben dem Magnetmodul aufgebaut ist, liegt das Magnetmodul frei und ist somit für den Benutzer gut greifbar und einfach von dem axialen Ende der Abtriebswelle abnehmbar bzw. auf dieses aufsetzbar.

Das Sensormodul ist innen in der Wandung des Gehäuses angeordnet. Dadurch ergibt sich eine praktische und kompakte Bauweise, bei welcher das Sensormodul den Bauraum des Drehantriebs kaum bzw. nicht vergrößert. Zudem ist das Sensormodul dadurch optimal vor mechanischen Beschädigungen und schädlichen Umwelteinflüssen geschützt.

Das Sensormodul ist ferner in demselben Wandungsabschnitt des Gehäuses angeordnet, aus dem das axiale Ende der Abtriebswelle herausgeführt wird. Dies ist von Vorteil, weil dadurch der Abstand zwischen der Magnetanordnung und dem Sensormodul verringert wird, so dass das Magnetfeld der Magnetanordnung besser erfasst werden kann, bzw. die Anforderungen an die Magnetanordnung und das Sensormodul geringer sind.

Insbesondere ist die Aufnahmekammer dabei länglich ausgebildet und in Richtung des axialen Endes der Abtriebswelle ausgerichtet. Das Sensormodul kann so besonders nah an das an dem axialen Ende der Abtriebswelle angeordnete Magnetmodul herangeführt werden.

In weiterer Ausgestaltung der Erfindung ist vorgesehen, dass das Sensormodul auf dem Wandungsabschnitt abnehmbar angebracht ist und sich vorzugsweise über das Magnetmodul erstreckt.

Insbesondere ist das Sensormodul dabei kastenförmig ausgebildet und weist einen Hohlraum auf, in dem das Magnetmodul aufgenommen wird, wenn das Sensormodul auf das Gehäuse des Drehantriebs aufgesetzt wird.

Erfindungsgemäß wird ferner ein Kalibrierungsverfahren für einen Drehantrieb mit einem Gehäuse, das eine Antriebseinrichtung und eine von der Antriebseinrichtung antreibbare, drehbar gelagerte Abtriebswelle aufweist, bereitgestellt, umfassend die Schritte: Erfassen, mittels eines am oder im Gehäuse angeordneten Sensormoduls, eines Magnetfeldmesswerts gemäß einem von einem Magnetmodul erzeugten Magnetfeld, Bestimmen, gemäß dem Magnetfeldmesswert, dass das Magnetmodul an die Abtriebswelle angebracht wird, Anfahren einer vorbestimmten Stellung der Abtriebswelle und Speichern eines von dem Magnetmodul erfassten Magnetfeldmesswerts in Zuordnung zu der vorbestimmten Stellung.

Vorzugsweise kann das Kalibrierungsverfahren mittels des vorstehend beschriebenen Drehantriebs durchgeführt werden.

Insbesondere werden bei dem Kalibrierungsverfahren die Schritte des Anfahrens der vorbestimmten Stellung und Speicherns des erfassten Magnetfeldwerts nur dann ausgeführt, wenn bestimmt wird, dass das Magnetmodul an die Abtriebswelle angebracht wird bzw. wurde.

Beispielhafte Ausführungsformen der Erfindung sind in der Zeichnung dargestellt. Dabei zeigt
- Figur 1: eine perspektivische Darstellung eines Drehantriebs gemäß einer ersten Ausführungsform,
- Figur 2: eine perspektivische Schnittdarstellung des Drehantriebs gemäß der ersten Ausführungsform,
- Figur 3: eine Explosionsdarstellung des Drehantriebs gemäß der ersten Ausführungsform,
- Figur 4: eine perspektivische Darstellung des Drehantriebs gemäß einer zweiten Ausführungsform,
- Figur 5: eine Explosionsdarstellung eines Drehantriebs gemäß der zweiten Ausführungsform,
- Figur 6: eine perspektivische Darstellung eines Magnetmoduls eines Drehantriebs gemäß der ersten und zweiten Ausführungsform,
- Figur 7: eine Ansicht von unten eines Magnetmoduls eines Drehantriebs gemäß der ersten und zweiten Ausführungsform,
- Figur 8: eine perspektivische Darstellung einer Prozessventilbaueinheit gemäß einer dritten Ausführungsform.

In der nachstehenden Figurenbeschreibung werden für funktionsgleiche Komponenten der dargestellten Ausführungsformen jeweils gleiche Bezeichnungen verwendet, wobei auf eine mehrfache Beschreibung funktionsgleicher Komponenten verzichtet wird.

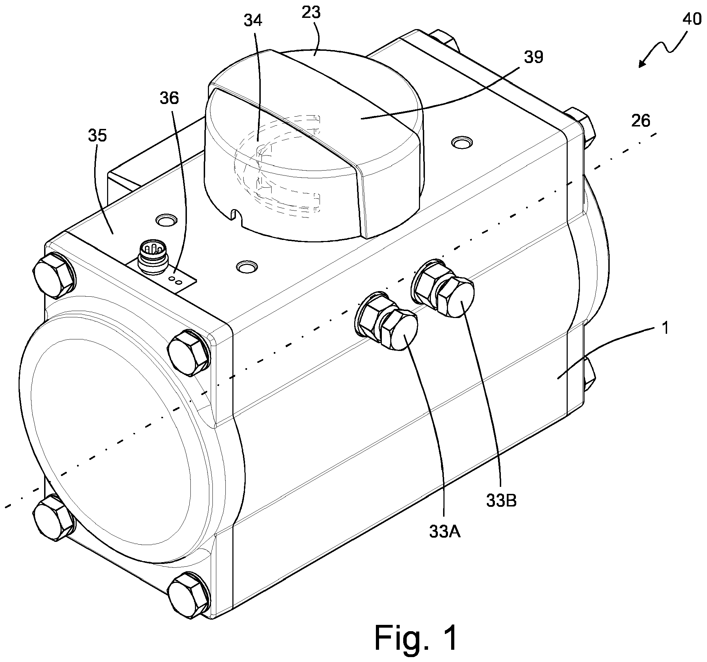

Die Figuren 1 bis 3 zeigen perspektivische Darstellungen eines Drehantriebs 40 gemäß einer ersten Ausführungsform.

Der Drehantrieb 40 der ersten Ausführungsform ist dazu geeignet, auf eine Ventilarmatur 24 aufgesetzt zu werden, um ein Ventilglied der Ventilarmatur 24 zu betätigen und so einen Fluidstrom zu beeinflussen.

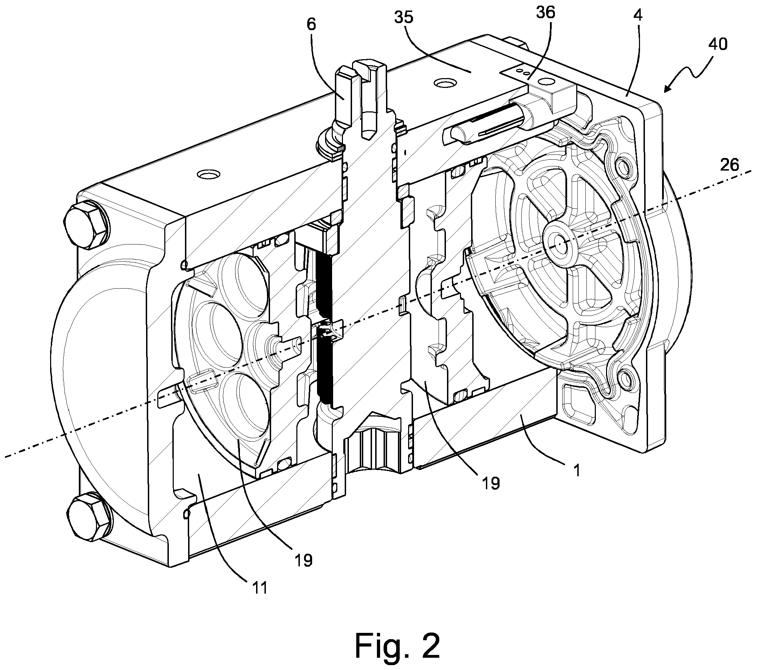

Wie in den Figuren 1 bis 3 gezeigt, umfasst der Drehantrieb 40 ein Gehäuse 1, das eine Antriebseinrichtung und eine von der Antriebseinrichtung antreibbare, drehbar gelagerte Abtriebswelle 6 aufweist. In dem in der Figur 2 gezeigten Beispiel umfasst die Antriebseinrichtung insbesondere einen Kolbenraum 11 und eine Antriebskolbenanordnung 19. Der Drehantrieb 40 ist demnach im gezeigten Beispiel fluidbetätigt ausgebildet. Alternativ dazu kann der erfindungsgemäße Drehantrieb auch als elektromagnetischer Drehantrieb ausgeführt sein.

Der Drehantrieb 40 umfasst eine Stellungserfassungseinrichtung zur Erfassung einer Stellung der Abtriebswelle 6. Die Stellungserfassungseinrichtung umfasst insbesondere ein als Stellungsanzeiger ausgebildetes Magnetmodul 23, das auf einem axialen Ende der aus dem Gehäuse 1 herausgeführten Abtriebswelle 6 abnehmbar aufgesetzt bzw. aufgesteckt ist. Das Magnetmodul 23 ist dabei drehfest mit der Abtriebswelle 6 verbunden.

Die Stellungserfassungseinrichtung umfasst ferner ein Sensormodul 36, das in einer Aufnahmekammer in einem Wandungsabschnitt 35 des Gehäuses 1 angeordnet ist. Der Wandungsabschnitt 35 ist derselbe Wandungsabschnitt, aus dem auch das axiale Ende der Abtriebswelle 6 herausgeführt wird.

Das Magnetmodul 23 umfasst eine Magnetanordnung 34, die ein Magnetfeld erzeugt. Das Sensormodul 36 ist ausgebildet, einen Magnetfeldmesswert gemäß dem von dem Magnetmodul 23 erzeugten Magnetfeld zu erfassen.

Der Drehantrieb 40 umfasst ferner eine Steuereinrichtung, die im gezeigten Beispiel in dem Sensormodul 36 integriert ist und Teil der Stellungserfassungseinrichtung bildet. Die Steuereinrichtung ist ausgebildet, gemäß dem vom Sensormodul 36 erfassten Magnetfeldmesswert zu bestimmen, ob das Magnetmodul 23 von dem Drehantrieb 40 bzw. der Abtriebswelle 6 abgenommen wird, und abhängig von der Bestimmung zu bewirken, dass der Drehantrieb in einen vorbestimmten Betriebszustand versetzt wird.

Die Steuereinrichtung ist im hier beschriebenen Beispiel ausgebildet, bei der Bestimmung, dass das Magnetmodul 23 abgenommen wird, einen Fehlerzustand einzunehmen und ein entsprechendes Fehlersignal bereitzustellen, das anzeigt, dass eine Stellungserfassung momentan nicht möglich ist. Vorzugsweise ist die Steuereinrichtung ferner ausgebildet, in dem Fehlerzustand in Zuordnung zu beiden Endstellungen gespeicherte Magnetfeldmesswerte zu löschen.

Alternativ oder zusätzlich dazu kann die Steuereinrichtung ausgebildet sein, bei erfasster bzw. bestimmter Abnahme des Magnetmoduls einen aus den vorstehend beschriebenen Betriebszuständen, insbesondere einen Entlüftungszustand, Wartungszustand, oder Not-Aus-Zustand einzunehmen.

Die Steuereinrichtung ist weiterhin ausgebildet, gemäß dem vom Sensormodul 36 erfassten Magnetfeldmesswert zu bestimmen bzw. erkennen, dass das Magnetmodul 23 auf das axiale Ende der Abtriebswelle 6 aufgesteckt wird. In diesem Fall nimmt die Steuereinrichtung einen Kalibrierungszustand ein. Insbesondere ist die Steuereinrichtung ausgebildet, im Kalibrierungszustand einen Magnetfeldmesswert in Zuordnung zu einer Endstellung der Abtriebswelle zu speichern, wenn für eine vorbestimmten Zeitperiode der Magnetfeldmesswert in einem vorbestimmten Toleranzbereich konstant ist.

Die Endstellungen der Abtriebswelle können dabei vom Benutzer mechanisch über die Stellmittel 33A und 33B eingestellt werden. Die Endstellungen können von der Abtriebswelle 6 angefahren werden, indem entsprechende Steuerbefehle an eine dem Drehantrieb zugeordnete Steuerventilanordnung ausgegeben werden. Die Steuerbefehle können von der Steuereinrichtung oder von einer externen Steuereinheit an die Steuerventilanordnung ausgegeben werden.

In dem in der Figur 1 gezeigten Beispiel ist das Magnetmodul 23 als Stellungsanzeiger ausgebildet, der ein Anzeigeelement 39 umfasst, über welches die Stellung der Abtriebswelle von einem Benutzer visuell erfasst werden kann.

Die Figur 2 zeigt eine Schnittdarstellung des Drehantriebs 40. Hier ist insbesondere die in einem Kolbenraum 11 angeordnete und aus zwei Antriebskolben bestehende Antriebskolbenanordnung 19 zu sehen. Die beiden Antriebskolben umfassen jeweilige hier nicht gezeigte, in Axialrichtung ausgerichtete Zahnstangen, die mit einem an der Abtriebswelle 6 angeordneten Abtriebsritzel in kämmendem Eingriff stehen, um eine Linearbewegung der Antriebskolben in eine Drehbewegung der Abtriebswelle 6 umzusetzen. Insbesondere sind dabei die Zahnstangen an entgegengesetzten Seiten der Abtriebswelle 6 angeordnet, so dass gegenläufige Linearbewegungen der Antriebskolben in jeweilige Drehbewegungen der Abtriebswelle 6 umgesetzt werden. So dreht sich die Abtriebswelle 6 in einer ersten Drehrichtung, wenn die Antriebskolben aufeinander zu laufen, und in einer zweiten Drehrichtung, wenn sich die Antriebskolben voneinander wegbewegen. Alternativ zu der Anordnung aus Zahnstangen und Abtriebsritzel kann auch eine Hebel-Schwinge (Scotch-Yoke) verwendet werden, um die Linearbewegung der Antriebskolbenanordnung 19 in eine Drehbewegung der Abtriebswelle 6 umzusetzen.

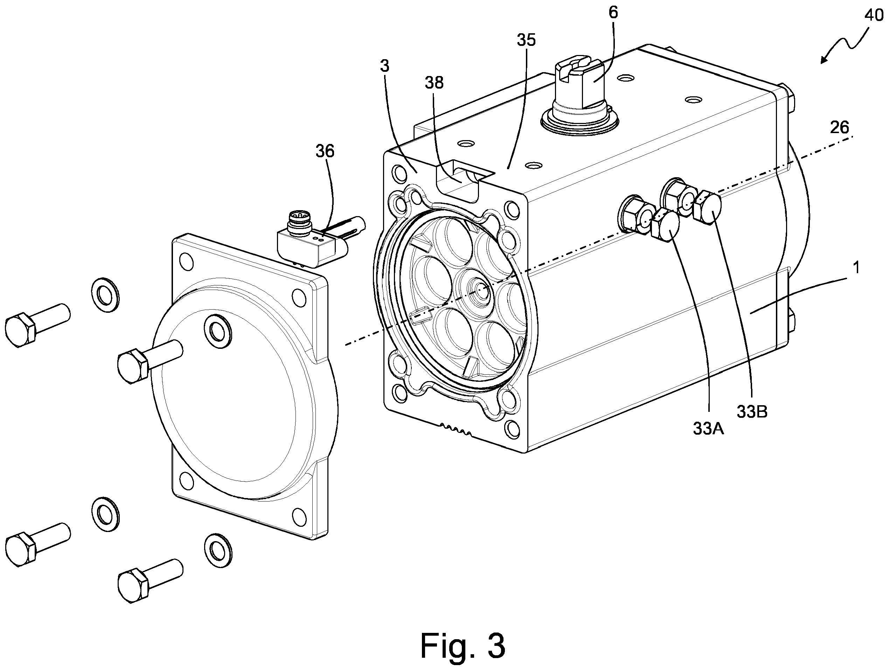

Die Figur 3 zeigt eine Explosionsdarstellung des Drehantriebs 40. Wie in der Figur 3 gezeigt, ist in dem Wandungsabschnitt 35 des Gehäuses 1 eine Aufnahmekammer 38 vorgesehen, in die das Sensormodul 36 eingesetzt wird. Die Aufnahmekammer 38 ist zu einer Stirnseite 3 des Gehäuses 1 hin offen. Das Sensormodul 36 kann im eingesetzten Zustand von einem Gehäusedeckel abgedeckt und in der Aufnahmekammer 38 gehalten werden.

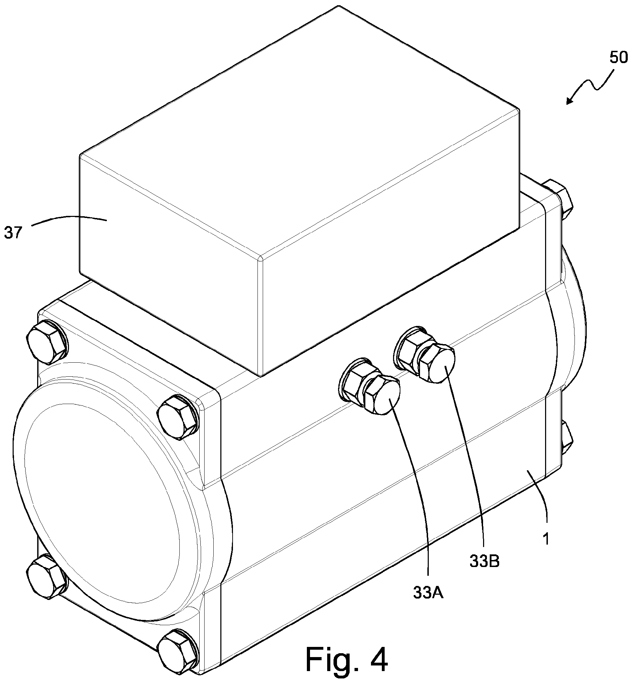

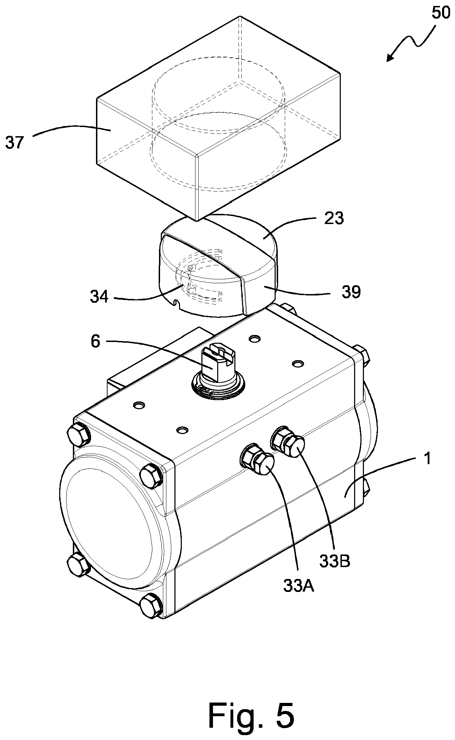

Die Figuren 4 und 5 zeigen perspektivische Darstellungen eines Drehantriebs 50 gemäß einer zweiten Ausführungsform.

Die zweite Ausführungsform unterscheidet sich von der ersten Ausführungsform insbesondere dadurch, dass bei der zweiten Ausführungsform ein Sensormodul 37 vorgesehen ist, dass auf dem Gehäuse 1 abnehmbar angeordnet ist und nicht, wie in der ersten Ausführungsform, in einem Wandungsabschnitt des Gehäuses angeordnet ist.

Ferner ist bei der zweiten Ausführungsform die Steuereinrichtung vorzugsweise separat vom Sensormodul 37 im oder am Gehäuse 1 vorgesehen. Beispielsweise kann die Steuereinrichtung in einer an der Stirnseite 3 des Gehäuses 1 angesetzten Funktionsmodulanordnung angeordnet sein.

In der zweiten Ausführungsform ist die Steuereinrichtung ausgebildet, basierend darauf, ob an der Steuereinrichtung gültige Magnetfeldmesswerte empfangen werden bzw. ob an der Steuereinrichtung überhaupt von dem Sensorelement Magnetfeldmesswerte empfangen werden, bestimmt, ob das Sensormodul 37 vom Gehäuse 1 abgenommen oder an dieses angebracht wird.

In Analogie zu der oben beschriebenen Ausführungsform ist die Steuereinrichtung ausgebildet, einen Fehlerzustand einzunehmen, wenn eine Abnahme des Sensormoduls 37 bestimmt wird, und einen Kalibrierungszustand einzunehmen, wenn eine Anbringung des Sensormoduls 37 bestimmt wird.

Wie in der Figur 5 gezeigt, ist das Sensormodul 37 vorzugsweise kastenförmig ausgebildet und weist einen Hohlraum auf, in den das Magnetmodul 23 aufgenommen wird, wenn das Sensormodul auf dem Gehäuse 1 angebracht ist.

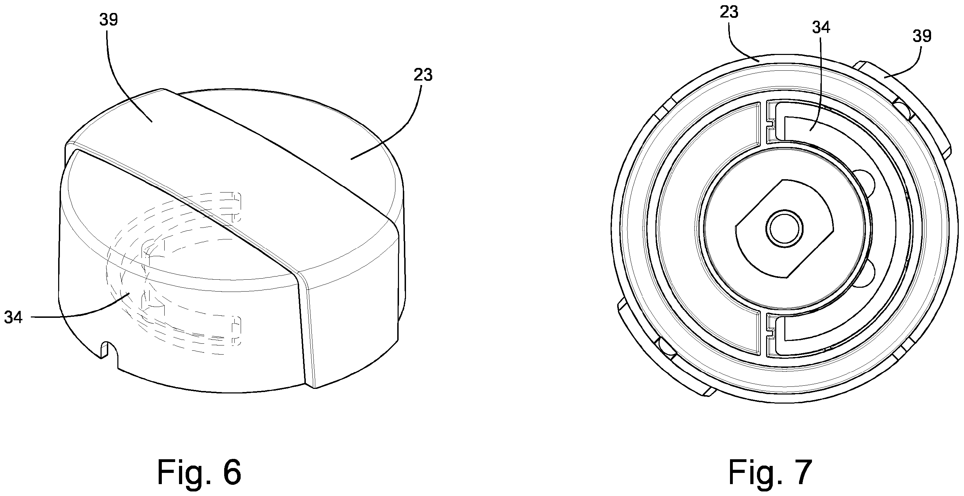

Die Figuren 6 und 7 zeigen das als Stellungsanzeiger ausgebildete Magnetmodul 23. Wie vorstehend beschrieben, umfasst der Stellungsanzeiger ein bügelförmiges Anzeigeelement 39 und die als Ringsegment ausgebildete Magnetanordnung 34. Vorzugsweise variiert dabei die Magnetisierung der Magnetanordnung 34 entlang des Umfangs des Ringsegments.

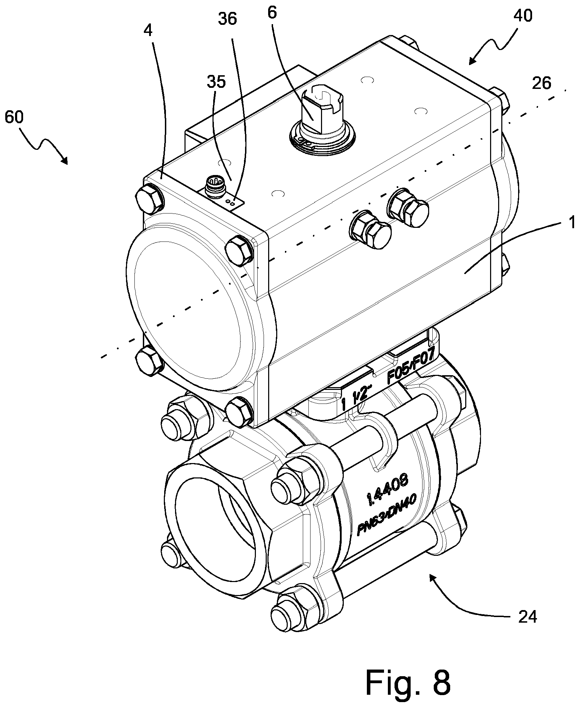

Die Figur 8 zeigt eine Prozessventilbaueinheit 60 gemäß einer dritten Ausführungsform. In dem gezeigten Beispiel umfasst die Prozessventilbaueinheit 60 einen Drehantrieb 40 gemäß der ersten Ausführungsform. Alternativ dazu kann die Prozessventilbaueinheit 60 auch einen Drehantrieb 50 gemäß der zweiten Ausführungsform umfassen.

Der Drehantrieb 40 sitzt auf einer Ventilarmatur 24, die eine Spindel und ein Ventilglied aufweist. Die Abtriebswelle 6 ist über die Spindel mit dem Ventilglied der Ventilarmatur 24 drehfest verbunden. Die Winkelstellung des Ventilglieds wird dementsprechend von der Winkelstellung der Abtriebswelle 6 bestimmt. Folglich kann aus einem von dem Sensormodul 36 bzw. der Steuereinrichtung bereitgestellten, der Stellung der Abtriebswelle 6 entsprechenden Stellungssignal auf die Stellung des Ventilglieds geschlossen werden.

Im Betrieb wird die Prozessventilbaueinheit 60 von einer an einem externen Druckanschluss des Drehantriebs 40 angeschlossenen Leitung mit Druckluft versorgt. Die Druckluft wird beispielsweise durch eine hier nicht gezeigte vorzugsweise in einer an der Stirnseite 3 des Gehäuses 1 angesetzten Funktionsmodulanordnung vorgesehenen Steuerventilanordnung geschleift, die insbesondere als 5/3-Wegeventil ausgebildet ist. Die Ausgänge der Steuerventilanordnung sind über entsprechende Arbeitskanäle mit Kammern des Kolbenraums 11 verbunden. Die Ausgänge der Steuerventilanordnung werden gemäß einem Steuerbefehl auf einen Druck- oder Entlüftungszustand geschaltet, um so die Antriebskolben der Antriebskolbenanordnung 19 in ihrer aktuellen bzw. einer definierten Stellung zu halten oder aufeinander zu bzw. voneinander weg zu bewegen. Der Steuerbefehl wird beispielsweise von der Steuereinrichtung oder einer anderen dem Drehantrieb zugeordneten Steuereinheit ausgegeben. Durch die Bewegung der Antriebskolben der Antriebskolbenanordnung 19 wird die Abtriebswelle 6 gedreht, wodurch wiederum die Spindel der Ventilarmatur 24 und schließlich das Ventilglieds der Ventilarmatur 24 gedreht bzw. betätigt wird.

Das mit der Abtriebswelle 6 drehfest verbundene Magnetmodul 23 nimmt die Drehbewegung der Abtriebswelle 6 auf, sodass die Lage bzw. die Position der Magnetanordnung 34 relativ zu dem Sensormodul 36 verändert wird. Dementsprechend verändert sich auch der vom Sensormodul erfasste Magnetfeldsensorwert. Basierend auf dem erfassten Magnetfeldsensorwert wird die Stellung der Abtriebswelle 6 bestimmt. Ferner bestimmt die Steuereinrichtung gemäß dem Magnetfeldsensorwert, ob das Magnetmodul 23 von der Abtriebswelle 6 abgenommen bzw. an diese angebracht wird, und nimmt dementsprechend einen Fehler- oder einen Kalibrierungszustand ein.

## Patentansprüche

1. Drehantrieb (40; 50) zur Betätigung eines Ventilglieds einer Ventilarmatur (24), mit einem Gehäuse (1), das eine Antriebseinrichtung und eine von der Antriebseinrichtung antreibbare, drehbar gelagerte Abtriebswelle (6) aufweist, die an das Ventilglied ankoppelbar ist, und einer Stellungserfassungseinrichtung zur Erfassung einer Stellung der Abtriebswelle (6), wobei die Stellungserfassungseinrichtung ein an der Abtriebswelle drehfest angebrachtes Magnetmodul (23) und ein am oder im Gehäuse angebrachtes Sensormodul (36; 37) aufweist, das ausgebildet ist, einen Magnetfeldmesswert gemäß dem von dem Magnetmodul (23) erzeugten Magnetfeld zu erfassen, wobei das Magnetmodul (23) und/oder das Sensormodul (37) vom Drehantrieb abnehmbar angebracht ist, und dass der Drehantrieb (40; 50) eine Steuereinrichtung umfasst, **dadurch gekennzeichnet, dass** die Steuereinrichtung ausgebildet ist, gemäß dem Magnetfeldmesswert zur bestimmen, dass das Magnetmodul (23) oder das Sensormodul (37) von dem Drehantrieb abgenommen oder an den Drehantrieb angebracht wird, und abhängig von der Bestimmung zu bewirken, dass der Drehantrieb in einen vorbestimmten Betriebszustand versetzt wird.

2. Drehantrieb (40; 50) nach Anspruch 1, **dadurch gekennzeichnet, dass** die Steuereinrichtung ausgebildet ist, bei Bestimmung der Anbringung des Magnetmoduls (23) oder des Sensormoduls (37) den Drehantrieb in einen Kalibrierungszustand zu versetzen.

3. Drehantrieb (40; 50) nach Anspruch 2, **dadurch gekennzeichnet, dass** die Steuereinrichtung ausgebildet ist, im Kalibrierungszustand wenigstens einen erfassten Magnetfeldmesswert in Zuordnung zu wenigstens einer vorbestimmten Stellung, vorzugsweise einer Endstellung, der Abtriebswelle abzuspeichern.

4. Drehantrieb (40; 50) nach Anspruch 3, **dadurch gekennzeichnet, dass** die Steuereinrichtung ausgebildet ist, einen erfassten Magnetfeldmesswert in Zuordnung zu einer vorbestimmten Stellung der Abtriebswelle abzuspeichern, wenn für eine vorbestimmte Zeitperiode der von dem Sensormodul erfasste Magnetfeldmesswert in einem vorbestimmten Toleranzbereich konstant ist.

5. Drehantrieb (40; 50) nach einem der Ansprüche 3 bis 4, **dadurch gekennzeichnet, dass** die Steuereinrichtung ausgebildet ist, bei Bestimmung der Abnahme des Magnetmoduls (23) oder des Sensormoduls (37) den Drehantrieb (40; 50) in einen Fehlerzustand zu versetzen, in dem die Steuereinrichtung ein Fehlersignal bereitstellt und/oder den wenigstens einen in Zugehörigkeit zu der wenigstens einen Stellung gespeicherten Magnetfeldmesswert löscht.

6. Drehantrieb (40; 50) nach einem der Ansprüche 1 bis 5, **dadurch gekennzeichnet, dass** der Drehantrieb (40; 50) fluidbetätigt ist und die Antriebsvorrichtung einen Kolbenraum (11), eine in dem Kolbenraum (11) angeordnete und an die Abtriebswelle (6) mechanisch angekoppelte Antriebskolbenanordnung (19), die den Kolbenraum (11) in mehrere Kammern unterteilt, und eine Steuerventilanordnung umfasst, die ausgebildet ist, wenigstens eine der Kammern mit einem Druckfluid zu beaufschlagen.

7. Drehantrieb (40; 50) nach Anspruch 6, **dadurch gekennzeichnet, dass** die Steuereinrichtung ausgebildet ist, bei Bestimmung der Abnahme des Magnetmoduls (23) oder des Sensormoduls (37) den Drehantrieb (40; 50) in einen Entlüftungszustand zu versetzen, in dem wenigstens eine der Kammern entlüftet wird.

8. Drehantrieb (40; 50) nach Anspruch 6 oder 7, **dadurch gekennzeichnet, dass** die Steuereinrichtung ausgebildet ist, bei Bestimmung der Abnahme des Magnetmoduls (23) oder des Sensormoduls (37) den Drehantrieb (40; 50) in einen Wartungszustand zu versetzen, in dem die Steuerventilanordnung gesperrt ist, so dass die Abtriebswelle (6) nicht durch die Antriebseinrichtung angetrieben werden kann.

9. Drehantrieb (40; 50) nach einem der voranstehenden Ansprüche, **dadurch gekennzeichnet, dass** die Steuereinrichtung ausgebildet ist, bei Bestimmung der Abnahme des Magnetmoduls (23) oder des Sensormoduls (37) den Drehantrieb (40; 50) in einen Not-Aus-Zustand zu versetzen, die Abtriebswelle (6) in eine vorbestimmte Not-Aus-Stellung zu fahren und/oder ein durch der Antriebseinrichtung auf die Abtriebswelle (6) beaufschlagtes Drehmoment herabzusetzen.

10. Drehantrieb (40; 50) nach einem der voranstehenden Ansprüche, **dadurch gekennzeichnet, dass** ein axiales Ende der Abtriebswelle (6) aus einem Wandungsabschnitt (35) des Gehäuses (1) herausgeführt ist und das Magnetmodul (23) auf dem axialen Ende der Abtriebswelle (6) aufgesetzt ist.

11. Drehantrieb (40; 50) nach Anspruch 10, **dadurch gekennzeichnet, dass** das Magnetmodul (23) als Stellungsanzeiger ausgebildet ist, der ein Anzeigeelement (39), vorzugsweise eine Markierung, zur visuellen Anzeige einer Stellung der Abtriebswelle sowie eine Magnetanordnung (34) aufweist.

12. Drehantrieb (40) nach Anspruch 10 oder 11, **dadurch gekennzeichnet, dass** das Sensormodul (36) in einer Aufnahmekammer (38) in dem Wandungsabschnitt (38) des Gehäuses (1) angeordnet ist.

13. Drehantrieb (50) nach Anspruch 10 oder 11, **dadurch gekennzeichnet, dass** das Sensormodul (37) auf dem Wandungsabschnitt (35) abnehmbar angebracht ist und sich vorzugsweise über das Magnetmodul (23) erstreckt.

14. Kalibrierungsverfahren für einen Drehantrieb (40; 50) mit einem Gehäuse (1), das eine Antriebseinrichtung und eine von der Antriebseinrichtung antreibbare, drehbar gelagerte Abtriebswelle (6) aufweist, umfassend die Schritte: Erfassen, mittels eines am oder im Gehäuse (1) angeordneten Sensormoduls (36; 37), eines Magnetfeldmesswerts gemäß einem von einem Magnetmodul (23) erzeugten Magnetfeld, Bestimmen, gemäß dem Magnetfeldmesswert, dass das Magnetmodul (23) an die Abtriebswelle angebracht wird, Anfahren einer vorbestimmten Stellung der Abtriebswelle (6) und Speichern eines von dem Magnetmodul (23) erfassten Magnetfeldmesswerts in Zuordnung zu der vorbestimmten Stellung.

## Claims

1. Rotary drive (40; 50) for actuating a valve element of a valve fitting (24), having a housing (1), which has a drive device and a pivot-mounted driven shaft (6) which can be driven by the drive device and which can be coupled to the valve element, and a position detection device for detecting a position of the driven shaft (6), wherein the position detection device has a magnet module (23) attached to the driven shaft in a torque-proof manner and a sensor module (36; 37) which is fitted onto or into the housing and is designed to detect a magnetic field measurement value according to the magnetic field generated by the magnet module (23), wherein the magnet module (23) and/or the sensor module (37) is attached such that it can be removed from the rotary drive, and the rotary drive (40; 50) comprises a control device, **characterized in that** the control device is adapted to determine, according to the magnetic field measurement value, that the magnet module (23) or the sensor module (37) is being removed from the rotary drive or is being attached to the rotary drive, and, depending on the determination made, to cause the rotary drive to be put into a predefined operating state.

2. Rotary drive (40; 50) according to Claim 1, **characterised in that** the control device is adapted to put the rotary drive into a calibration state if attachment of the magnet module (23) or the sensor module (37) is determined.

3. Rotary drive (40; 50) according to Claim 2, **characterised in that** the control device is adapted to store, in the calibration state, least one detected magnetic field measurement value in assignment to at least one predefined position, preferably an end position, of the driven shaft.

4. Rotary drive (40; 50) according to Claim 3, **characterised in that** the control device is adapted to store a detected magnetic field measurement value in assignment to a predefined position of the driven shaft if for a predefined period of time the magnetic field measurement value detected by the sensor module is constant within a predefined tolerance range.

5. Rotary drive (40; 50) according to one of Claims 3 and 4, **characterised in that** the control device is adapted to put, if removal of the magnet module (23) or the sensor module (37) is determined, the rotary drive (40; 50) into an error state, in which the control device provides an error signal and/or deletes the at least one magnetic field measurement value stored in association with the at least one position.

6. Rotary drive (40; 50) according to any one of Claims 1 to 5, **characterised in that** the rotary drive (40; 50) is fluid-actuated and the drive device comprises a piston space (11), a drive piston arrangement (19), which is arranged in the piston space (11), is mechanically coupled to the driven shaft (6) and subdivides the piston space (11) into a plurality of chambers, and a control valve arrangement which is adapted to supply at least one of the chambers with a pressurised fluid.

7. Rotary drive (40; 50) according to Claim 6, **characterised in that** the control device is adapted to put, if removal of the magnet module (23) or the sensor module (37) is determined, the rotary drive (40; 50) into a ventilation state, in which at least one of the chambers is ventilated.

8. Rotary drive (40; 50) according to Claim 6 or 7, **characterised in that** the control device is adapted to put, if removal of the magnet module (23) or the sensor module (37) is determined, the rotary drive (40; 50) into a maintenance state, in which the control valve arrangement is disabled, so that the driven shaft (6) cannot be driven by the drive device.

9. Rotary drive (40; 50) according to any one of the preceding claims, **characterised in that** the control device is adapted to put, if removal of the magnet module (23) or the sensor module (37) is determined, the rotary drive (40; 50) into an emergency shutdown state, to move the driven shaft (6) into a predefined emergency shutdown position and/or to reduce a torque applied to the driven shaft (6) by the drive device.

10. Rotary drive (40; 50) according to any one of the preceding claims, **characterised in that** an axial end of the driven shaft (6) is brought out of a wall section (35) of the housing (1) and the magnet module (23) is mounted onto the axial end of the driven shaft (6).

11. Rotary drive (40; 50) according to Claim 10, **characterised in that** the magnet module (23) is adapted as a position indicator which has an indicating element (39), preferably a marking, for visually indicating a position of the driven shaft and a magnet arrangement (34).

12. Rotary drive (40) according to Claim 10 or 11, **characterised in that** the sensor module (36) is arranged in a receiving chamber (38) in the wall section (35) of the housing (1).

13. Rotary drive (50) according to Claim 10 or 11, **characterised in that** the sensor module (37) is attached to the wall section (35) removably and preferably extends over the magnet module (23).

14. Calibration method for a rotary drive (40; 50) having a housing (1) which has a drive device and a pivot-mounted driven shaft (6) which can be driven by the drive device, comprising the steps: detecting, by means of a sensor module (36; 37) arranged on or in the housing (1), a magnetic field measurement value according to a magnetic field generated by a magnet module (23), determining, according to the magnetic field measurement value, that the magnet module (23) is being attached to the driven shaft, moving the driven shaft (6) to a predefined position and storing a magnetic field measurement value, which is detected by the magnet module (23), in assignment to the predefined position.

## Revendications

1. Entraînement de rotation (40 ; 50) pour l'actionnement d'un organe de soupape d'un raccord à soupape (24), avec un boîtier (1), qui présente un dispositif d'entraînement et un arbre de sortie (6) logé en rotation, pouvant être entraîné par le dispositif d'entraînement, qui peut être accouplé à l'organe de soupape, et un dispositif de détection de position pour la détection d'une position de l'arbre de sortie (6), dans lequel le dispositif de détection de position présente un module magnétique (23) monté solidaire en rotation au niveau de l'arbre de sortie et un module de capteur (36 ; 37) monté au niveau du ou dans le boîtier, qui est réalisé pour détecter une valeur de mesure de champ magnétique conformément au champ magnétique généré par le module magnétique (23), dans lequel le module magnétique (23) et/ou le module de capteur (37) est monté de manière à pouvoir être retiré de l'entraînement de rotation, et que l'entraînement de rotation (40 ; 50) englobe un dispositif de commande, **caractérisé en ce que** le dispositif de commande est réalisé pour déterminer conformément à la valeur de mesure de champ magnétique que le module magnétique (23) ou le module de capteur (37) est retiré de l'entraînement de rotation ou est monté au niveau de l'entraînement de rotation, et pour entraîner en fonction de la détermination le fait que l'entraînement de rotation soit amené dans un état de fonctionnement prédéterminé.

2. Entraînement de rotation (40 ; 50) selon la revendication 1, **caractérisé en ce que** le dispositif de commande est réalisé pour amener l'entraînement de rotation dans un état d'étalonnage en cas de détermination du montage du module magnétique (23) ou du module de capteur (37).

3. Entraînement de rotation (40 ; 50) selon la revendication 2, **caractérisé en ce que** le dispositif de commande est réalisé pour enregistrer à l'état d'étalonnage au moins une valeur de mesure de champ magnétique détectée en association avec au moins une position prédéterminée, de préférence une position d'extrémité, de l'arbre de sortie.

4. Entraînement de rotation (40 ; 50) selon la revendication 3, **caractérisé en ce que** le dispositif de commande est réalisé pour enregistrer une valeur de mesure de champ magnétique détectée en association avec une position prédéterminée de l'arbre de sortie, lorsque la valeur de mesure de champ magnétique détectée par le module de capteur est constante dans une plage de tolérance prédéterminée pour une période de temps prédéterminée.

5. Entraînement de rotation (40 ; 50) selon l'une quelconque des revendications 3 à 4, **caractérisé en ce que** le dispositif de commande est réalisé pour amener l'entraînement de rotation (40 ; 50) dans un état d'erreur en cas de détermination du retrait du module magnétique (23) ou du module de capteur (37), dans lequel le dispositif de commande met à disposition un signal d'erreur et/ou supprime l'au moins une valeur de mesure de champ magnétique enregistrée appartenant à l'au moins une position.

6. Entraînement de rotation (40 ; 50) selon l'une quelconque des revendications 1 à 5, **caractérisé en ce que** l'entraînement de rotation (40 ; 50) est actionné par fluide et le dispositif d'entraînement englobe un espace de piston (11), un agencement de piston d'entraînement (19) accouplé mécaniquement à l'arbre de sortie (6) et agencé dans l'espace de piston (11), qui subdivise l'espace de piston (11) en plusieurs chambres, et un agencement de soupape de commande, qui est réalisé pour solliciter au moins une des chambres avec un fluide sous pression.

7. Entraînement de rotation (40 ; 50) selon la revendication 6, **caractérisé en ce que** le dispositif de commande est réalisé pour amener l'entraînement de rotation (40 ; 50) dans un état de purge en cas de détermination du retrait du module magnétique (23) ou du module de capteur (37), dans lequel au moins une des chambres est purgée.

8. Entraînement de rotation (40 ; 50) selon la revendication 6 ou 7, **caractérisé en ce que** le dispositif de commande est réalisé pour amener l'entraînement de rotation (40 ; 50) dans un état de maintenance en cas de détermination du retrait du module magnétique (23) ou du module de capteur (37), dans lequel l'agencement de soupape de commande est bloqué de sorte que l'arbre de sortie (6) ne peut pas être entraîné par le dispositif d'entraînement.

9. Entraînement de rotation (40 ; 50) selon l'une quelconque des revendications précédentes, **caractérisé en ce que** le dispositif de commande est réalisé pour amener l'entraînement de rotation (40 ; 50) dans un état d'arrêt d'urgence en cas de détermination du retrait du module magnétique (23) ou du module de capteur (37), pour conduire l'arbre de sortie (6) dans une position d'arrêt d'urgence prédéterminée et/ou pour diminuer un couple sollicité par le dispositif d'entraînement sur l'arbre de sortie (6).

10. Entraînement de rotation (40 ; 50) selon l'une quelconque des revendications précédentes, **caractérisé en ce qu'**une extrémité axiale de l'arbre de sortie (6) est sortie à partir d'une section de paroi (35) du boîtier (1) et le module magnétique (23) est mis en place sur l'extrémité axiale de l'arbre de sortie (6).

11. Entraînement de rotation (40 ; 50) selon la revendication 10, **caractérisé en ce que** le module magnétique (23) est réalisé en tant qu'indicateur de position, qui présente un élément d'affichage (39), de préférence un marquage, pour l'affichage visuel d'une position de l'arbre de sortie ainsi qu'un agencement de soupape (34).

12. Entraînement de rotation (40) selon la revendication 10 ou 11, **caractérisé en ce que** le module de capteur (36) est agencé dans une chambre de réception (38) dans la section de paroi (38) du boîtier (1).

13. Entraînement de rotation (50) selon la revendication 10 ou 11, **caractérisé en ce que** le module de capteur (37) est monté de manière à pouvoir être retiré sur la section de paroi (35) et s'étend de préférence au-dessus du module magnétique (23).

14. Procédé d'étalonnage pour un entraînement de rotation (40 ; 50) avec un boîtier (1), qui présente un dispositif d'entraînement et un arbre de sortie (6) logé en rotation, pouvant être entraîné par le dispositif d'entraînement, comprenant les étapes de : détection, au moyen d'un module de capteur (36 ; 37) agencé au niveau du ou dans le boîtier (1), d'une valeur de mesure de champ magnétique conformément à un champ magnétique généré par un module magnétique (23), détermination, conformément à la valeur de mesure de champ magnétique, du fait que le module magnétique (23) est monté au niveau de l'arbre de sortie, approche d'une position prédéterminée de l'arbre de sortie (6) et enregistrement d'une valeur de mesure de champ magnétique détectée par le module magnétique (23) associée à la position prédéterminée.
